# EUROPEAN PATENT SPECIFICATION

(11) **EP 2 242 961 B1**
(45) Date of publication and mention of the grant of the patent: **25.07.2012**
(21) Application number: 09702298.2
(22) Date of filing: 14.01.2009
(51) Int. Cl.: F24J 2/52

(54) **PHOTOVOLTAIC SOLAR ISLAND**
FOTOELEKTRISCHE SOLARINSEL
ÎLE SOLAIRE PHOTOVOLTAÏQUE

(30) Priority: 15.01.2008 US 21091; 13.01.2009 US 144238
(43) Date of publication of application: 27.10.2010
(73) Proprietor: Nolaris SA, 2002 Neuchâtel (CH)
(72) Inventor: HINDERLING, Thomas, 8052 Zürich (CH)
(74) Representative: GLN
(86) International application number: PCT/IB2009/000055
(87) International publication number: WO 2009/090538

(56) References cited:
- WO-A-99/46543
- WO-A-2009/001225
- DE-A1- 3 633 172
- DE-A1- 3 934 517
- DE-A1- 4 006 516
- DE-A1- 10 318 036
- US-A- 5 445 177

## Description

### Field Of The Invention

The present invention relates to a man-made island, either land-based or sea-based, that is equipped with solar energy collection facilities. More particularly, the present invention relates to a large scale structure of this type which is capable of producing electrical energy in a cost-effective manner.

### Background Of The Invention

It is generally accepted that the earth is fast approaching an energy crisis of incalculable proportions. Some say that crisis will occur around the year 2040.

It appears that solar power may be the only source that can theoretically overcome the upcoming energy crisis without disrupting energy costs. Geothermal energy is a distant second possibility, but clearly at much higher costs.

Solar energy is principally suited to mitigating such a future energy crisis. For instance, almost 10'000 GTEP (TEP = Tons Equivalent Petrol) of solar radiation reaches the earth every year. Yet, only up to 5 GTEP of usable solar power would be needed to make a significant step toward energy sustainability for the earth.

However, there have been practical limitations to large-scale implementation of energy producing systems that rely on the sun. For example, photovoltaic cells are capable of converting solar energy (i.e. sunlight) to usable energy, i.e. electricity. But the overall efficiency of these devices is about 10-18%, depending on the materials used. Also, higher efficiency generally requires more expensive materials. Still further, the manufacture of photovoltaic cells requires the use of highly toxic chemicals, which present a significant and ever-expanding environmental problem.

For these reasons, solar thermal technology, the other main technology for converting solar energy to electricity, seems to be one potential solution for producing a sufficient number of GTEPs in the foreseeable future, while remaining relatively inexpensive.

A specific solar thermal technology that is now widely being used in pilot applications is the solar parabolic trough. A parabolic trough, shaped like the bottom half of a large drainpipe, reflects sunlight to a central receiver tube that runs above it. Pressurized water and other fluids are heated in the tube and used to generate steam, which can then drive turbo-generators to produce electricity or to provide heat energy for industry.

In theory, parabolic troughs have had the potential for efficient electricity production, because they can achieve relatively high turbine inlet temperatures. However, in practice the land requirements for this technology are significant. Moreover, recent studies indicate that previously estimated electricity costs, using this technology, may have been over-optimistic. In short, the perceived promise on this technology has not yet delivered tangible benefits, in a practical sense, either due to inefficiencies or excessive costs, and also due to the inherent limitations and variations in solar irradiation. More specifically, these trough collectors require expensive and maintenance-intensive guidance systems to dynamically adjust the angular positions of the panels of the trough, dependent on the sun's position. This requires expensive gear drives, and also large support structures that can withstand significant load fluctuations and other structural considerations, like disclosed in DE3934517. This document discloses the characteristics of the preamble of claim 1.

### Summary And Overview Of The Preferred Embodiments

It is an object of the present invention to achieve practical and tangible progress in harnessing solar energy, to mitigate the known concerns associated with current sources of electrical energy, including the possibility of a significant energy crisis in the foreseeable future.

It is another object of this invention to facilitate the large scale generation of electrical energy via the use of solar radiation, and to do so at an economically viable cost.

The present invention achieves these objectives by placing solar radiation collector modules on a large scale lightweight man-made island or islands that are low-cost, up to several hundred meters in diameter, and possibly even constructed with a diameter of over one kilometer. The island could either operate at sea, on large natural lakes, or on land where it would be based within a recessed trough of concrete that would hold a fluid of appropriate viscosity such as natural oil, or even water. The island floats. The word lightweight refers to specific weight, that is platform surface space/overall weight.

This island should be relatively tall in height, e.g., more than 10 meters, and possibly even as tall as 30 meters to avoid or at least minimize any negative effects of rough seas, etc. The land version, however, can theoretically be built much lower, i.e. about 2 meters. Nonetheless, the land based version could also benefit from a certain height if it is deployed in a difficult environment, such as a desert. In that case, a minimum height would help in enabling the solar concentrator modules to be located well above the desert surface, out of harm's way in the case of sand storms. The greatest abrasive effect of sand storms occurs in the boundary layer of sand, just above the ground. Generally, if the island is taller than the typical height of this boundary layer, the solar concentrators and other installations will be much less prone to suffer defects as a consequence of sand storms. The island rotates to track the position of the sun. The land-based version of this island floats on liquid held within a large ring-shaped trough, via a large outer ring structure generally sized to fit within the trough. The sea-based version also uses the outer ring structure. The floating outer ring facilitates rotation of the island to a desired orientation, to optimize the position of the solar radiation collectors located on the island. Instead of adjusting the positions of the multiple panels of the solar collectors, the collector panels are fixed in place, but supported on a large platform that adjusts to optimize solar radiation effects.

The island is essentially circular, although the outer ring structure does not have to be exactly circular. For the land version of the island, the base of the outer ring structure must have a bottom element that is close to circular in shape, to allow the bottom element to rotate around within the concrete trough described above. The outer ring could also be assembled from segments of straight pipe sections that have a cross-section that is round, square, oval or any other suitable shape. The outer ring structure may use typical features that are common in ship design, such as isolating the interior volumes within those pipe sections, to protect against the possibility of sinking, if the outer ring develops a leak. One preferred embodiment of the invention contemplates the use of pipe sections that are typically used for oil pipelines.

According to one preferred embodiment of this invention, a man-made island with solar collection facilities includes a floating platform, the platform primarily comprising a flexible cover, or foil, which extends across an outer ring structure and is sealed thereto. The top cover is an industrial-grade, long-life and UV-resistant material that is either vulcanized and or clamped or attached by any other suitable manner to the outer ring structure, so that it is airtight. This creates an enclosed volume below the cover. A compressor or blower system is installed so as to be in fluid communication with the enclosed volume and operable to create a slight over-pressure under the cover. Current studies show that an over-pressurization of about 0.005 bar should be sufficient, but in some situations it could be substantially greater. Also, the over-pressure is dynamically adjustable, as described below, to achieve and maintain a desired floating effect. It may be desirable to pressurize the enclosed volume to the point of creating an upwardly directed bulge in the center of the cover, to facilitate rainwater runoff in a radial outward direction. Also, the cover could include channels to facilitate runoff in the desired direction. In fact, the runoff could be used as part of a desalinization system. To achieve the desired over-pressurization, a plurality of compressors, i.e. blowers, may be used.

A land wire facility operatively connects the man-made island to the local grid. Where no substantial electrical grid is available for connection, a hydrogen production facility is connected. For the water-deployed version, the man-made island has a sufficient number ofpropulsion devices driven by electrical or other power distributed along the outer ring structure. These propulsion devices may move the island to a desired location, and also turn the island to a desired orientation relative to the sun.

The land-based version of the man-made island of this invention has centering mechanisms, namely wheels, for centering the island on its axis of rotation within the trough. To turn the island, this structure uses driveable wheels that roll on the outside of the concrete ring. Because the man-made island is floatably supported, the power actually needed to rotate the island is minimal. Relatively small motors distributed around the outer structure will be suitable for turning the island, effectively by about 360 degrees in one day.

To reduce the total weight of the island, and to reduce susceptibility to flexing due to wind, the solar concentrator modules supported on the platform have a flow-through lightweight design which allows air to actually flow through the concentrator panels. Such collectors can be assembled from plain industrially manufactured, mirrored band steel or aluminum. This type of design substantially reduces costs and weight compared to typical parabolic trough designs. Also, this design can be easily assembled in countries close to the equator, where difficult manufacturing processes, e.g., the bending of large-scale aluminum mirror elements, may not be feasible.

The enclosed volume of this man-made island is bounded by the outer ring structure, the cover, and the water surface (for the sea-based version), or the land surface (for the land-based version). For the land version, the sealing effect for the enclosed volume is achieved in part by the concrete trough. One particular advantage with the land version is that the earth surface underneath the cover could remain untreated. Also, this surface could hold some of the technical installations used to operate the island. Thus, those installations would not necessarily have to be supported by the outer ring structure, as would be the case for the man-made island floating at sea. If an installation were actually located under the platform, for the land version, overlying sections of the cover could be of transparent material. This would provide for some ambient sunlight to reach facilities below, in which the operating team is working.

A lightweight space frame structure resides above the cover, and supports the solar radiation collector modules. Alternatively, or even additionally, a pre-tensioned cable system spans the cover, and the outer ring structure holds the mounts for these cables. Still further, a honeycomb structure could be used as this upper structure. The air cushion under the cover is maintained at a pressure that actually supports the upper structure. For this purpose the upper structure, or even the modules or the cover, holds a plurality of sensors, such as strain gauges, that are interconnected in a network that is operatively connected to a computer, which is in turn connected to the compressor system. The sensors measure a desired measurable condition related to the cover, such as the strain on the space frame, at difference places around the cover. The computer uses an appropriate algorithm and corresponding software to control the compressor system to dynamically adjust the air pressure under the cover, to minimize the strain on the space frame, or to address the sensed condition in an appropriate manner. It is to be understood that any one of a number of other force measuring devices could be used to dynamically sense and analyze the mechanical load on the cover, the upper structure, or the modules, and to initiate an appropriate change in over-pressurization.

This man-made island is particularly lightweight because the space frame support structure holding the solar concentrators will barely have to be able to support its own weight. Any excess forces induced by wind or any other atmospheric or untoward effects can be compensated by the over-pressure cushion under the flexible cover, particularly via appropriate sensors and dynamic control of the compressor system.

According to another aspect of the invention, the outer ring structure has additional support frames on the outside thereof, to hold photovoltaic (PV) elements. Electrical power generated by those PV elements and their battery storage and DC/AC converter facilities could be used to power the positioning systems of the island and also the operating room systems, such as the drive system, and the compressor or blower system.

According to still another aspect of the invention, the sea-based version contains propulsion equipment mounted on the outer ring structure, to move the island north and south across the equator in parallel with the seasons. This enables the island to maintain a vertical position under the sun's daily path. It has been shown that solar power output could be increased by up to 15 percent per year if a solar energy production facility is actually able to follow the sun's path in the manner suggested here. The positioning system of such an island could include a GPS system with appropriate computing equipment including the algorithms and associated software establishing latitude and longitude based on the law of Cook (see **http://fred.elie.free.fr/cadrans solaires.htm.** The same positioning system would also maintain the island's position during the day when it essentially turns through about 180 degrees to follow the sun from rise in the east to sunset in the west.

A brief calculation of the potential output of this man-made island, with a diameter of 500 meters, is shown below. Such an island would have a surface area inside the outer ring structure of about 195,000 square meters. Solar radiation in the tropics is approximately 1 kW per square meter. Assuming a very conservative overall transformation efficiency of between 10 and 20 percent, the peak output of such an island can be estimated to be over 30 MW. This assumes that the island operates at peak power during about 8 hours per day. For purposes of this calculation, additional power generated at less than peak output during the morning and evening hours has been omitted. That results in an output of approximately 240 MWh per day or about 85000 MWh per year, assuming that 15 days per year are reserved for maintenance operations. Thus, one such island could produce an amount of electrical power in one year that is approximately worth $ 12.75 million at an average sales price of $ 0.15/kWh.

The economics behind this man-made island become more attractive as the size of the island increases, Also, the increase in size further increases stability for the water- deployed version, particularly in adverse weather. Thus, this inventive man-made solar island represents a major contribution toward sustainable energy production that will so desperately be needed in the near future.

The over-pressurization of the enclosed volume below the cover plays a significant role in supporting the solar radiation collector modules. More particularly, to generate electricity from solar radiation at an economically viable cost, the surface area needed is extremely large. Although commercially available solar collectors continue to improve in efficiency, the surface area requirements, i.e. the surface area occupied by the collectors, are still immense. The need for large surface area creates other practical considerations, namely how to sufficiently support the collectors on a load bearing structure that is also reorientatable relative to the position of the sun. With this invention, the answer is threefold. First, the large outer ring floatably supports the periphery of the island, and thereby bears a substantial portion of the total weight. Thus, the platform floats. Second, the over-pressurized volume below the cover helps to significantly reduce the load in the center of the island. Third, the use of an appropriate upper support structure, i.e. a lightweight space frame, or alternatively, a tensioned cable system, or a honeycomb structure, further assures adequate mechanical support for the solar collectors.

The present invention also contemplates the capability of cleaning the solar collectors via a driveable cart, or other device, that moves along a rail or track that extends alongside the rows of collectors. This device could be a robot that directs pressurized fluid, most likely air, at the surfaces of the modules. The track could be a dual rail track which supports a wheeled cart, or even a monorail-type track. The wheeled cart configuration enables travel along the rails to any desired position on the platform to provide access for any needed maintenance.

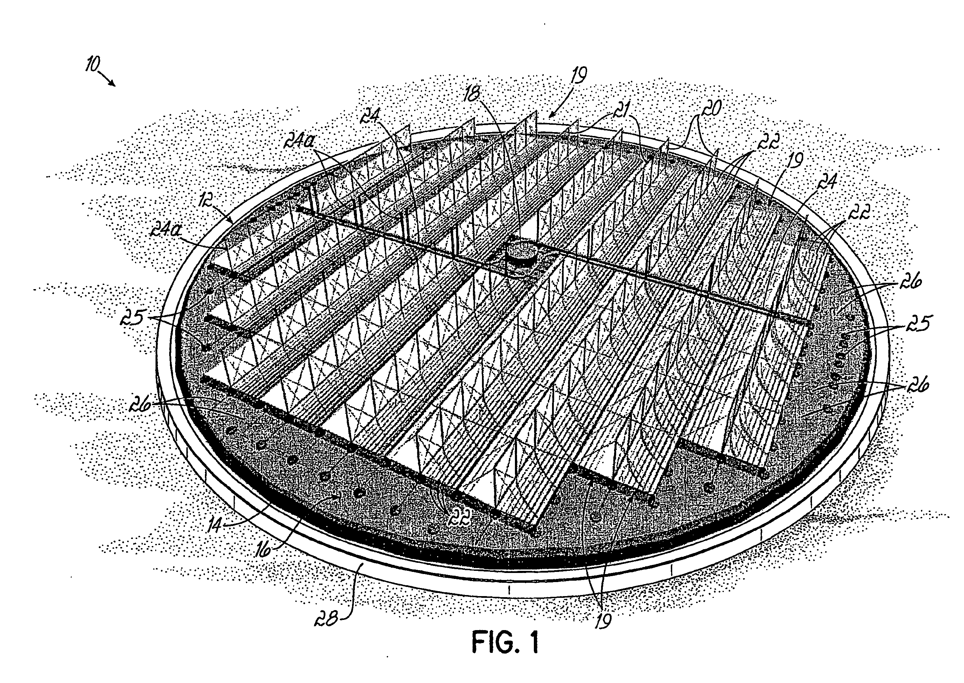

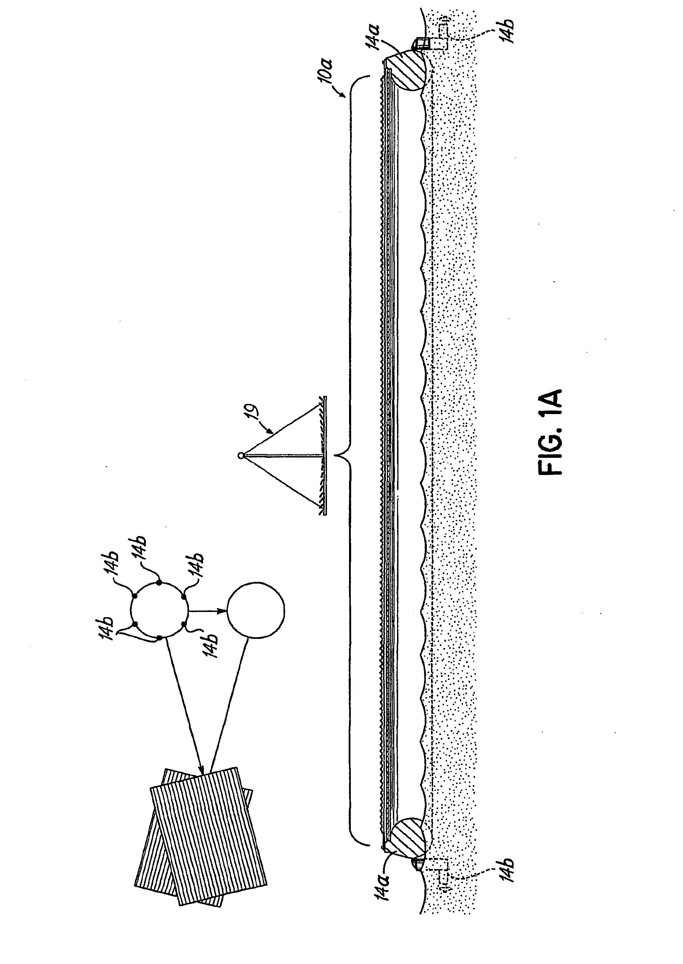

The details of the original solar island concept are described and shown in applicant's pending PCT Application No. IB2008/002723, filed on March 5, 2008, entitled "Man Made Island With Solar Energy Collection Facilities," which is expressly incorporated by reference herein, in its entirety. More particularly, the present invention can be best understood in the context of Figs 1-14 of this previously-filed PCT application, because the present invention uses photovoltaic conversion of solar radiation, rather than steam generation, but does so within generally the same solar island structure.

One of the main principles for converting solar energy to usable energy (i.e. electricity) is the use of photovoltaic converters that allow a direct conversion of light to electricity, via a semi-conductor process. There are, however, various drawbacks associated with such converters. First of all, photovoltaic collectors or panels are generally limited to an overall efficiency of between 10 - 18 percent, depending on the semi-conductor materials used. They are drastically more expensive for the higher efficiencies. Photovoltaic converters do not necessarily require a manipulation of their angular position following the path of the sun. But the raw materials necessary to produce photovoltaic converters are expensive, and the recent run on photovoltaic converters has sent raw material prices soaring. The surge in demand has led raw material prices to leap from $9 per kilogram (kg) to over $150 per kg.

By combining the main design features of the solar island concept with photovoltaic converters of the type that are presently available on the market, the present invention does away with some of the major drawbacks of photovoltaic converters as described above. In particular this invention proposes the use of linear Fresnel - type optical lenses to create a radiation concentration effect. It is known in the art to use Fresnel lenses to increase the efficiency of photovoltaic cells. See in particular US 5505789, US 6399874 B1 and US 6804062 B2. However, by combining the concentration effect of a Fresnel lens with the angular adjustment of the solar island installation, it is estimated that the present invention will achieve an increase in the power output of photovoltaic converters by a factor of about 10-20. To further assure this increased output, it is also contemplated to use appropriate cooling devices to cool the photovoltaic converters.

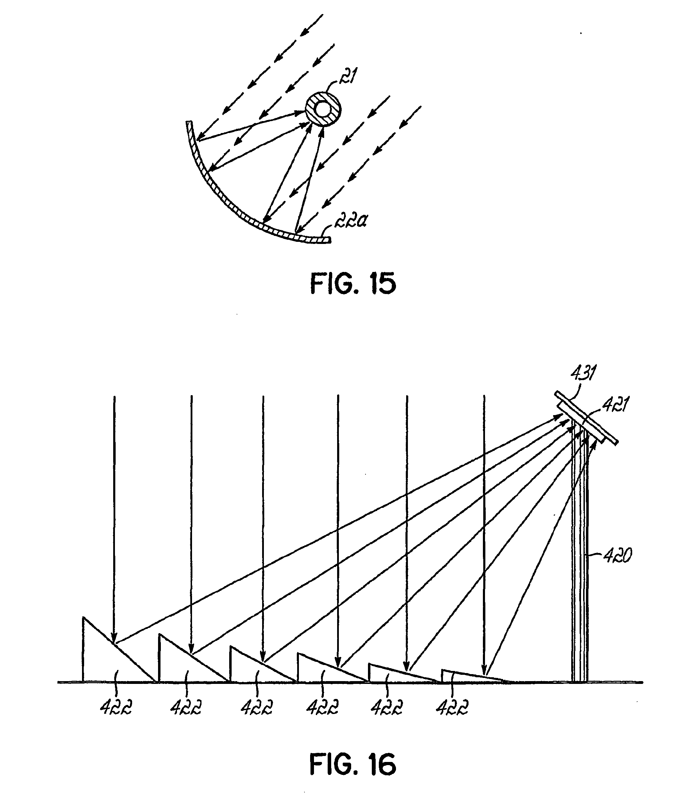

These and other features of the invention will be more readily understood in view of the following detailed description and the drawings. Notably, Figs 1-14 and the description thereof are substantially identical to corresponding portions of applicant's previously mentioned PCT application, while additional Figs 15, 16, 17, 17A and 17B, and 18 relate to photovoltaic conversion.

### Brief Description Of The Drawings

Fig 1 is a perspective view of a man-made island constructed according to one aspect of the invention.
Fig 2 is a horizontal sectional view which schematically shows a land-based version of the man-made island.
Fig 3 is a plan view, in schematic form, which shows the land-based version of the man-made island shown in Fig 2.
Fig 3A is an enlarged portion of Fig 3.
Fig 4A is a horizontal sectional view which schematically shows one version of the outer ring structure and the trough of a land-based man-made island suitable for the invention.
Fig 4B is a horizontal section view, similar to Fig 4A, which schematically shows another variation of the outer ring structure and the trough, for the land-based version of the man-made island of this invention.
Fig 5 is a perspective view of a drive wheel unit, shown connected to the outer ring structure, according to one preferred embodiment of the drive mechanism of this invention.
Fig 6 is a perspective view, similar to Fig 4, of a centering wheel unit, shown connected to the outer ring structure, according to one preferred embodiment of the centering mechanism of this invention.
Fig 7A is a perspective view of a pod supporting a portion of a lightweight space frame on the cover of the platform, in accordance with one embodiment of the upper structure of this invention.
Fig 7B is a horizontal view which schematically shows the pod and other structures shown in Fig 7A.
Fig 8 is a perspective view which schematically shows the bottom of a pod of the type shown in Figs 7A and 7B.
Fig 9 is a perspective view which schematically shows a computer-model generated simulation of the depressions that could occur on the cover of the man-made island of this invention.
Fig 10 is a horizontal view that schematically shows another embodiment for the upper structure of this invention, namely a cable system that cooperates with a plurality of pontoons, which in turn hold support boards onto which Fresnel-type solar concentrators are mounted.
Fig 10A is a perspective view showing an alternative pontoon structure.
Fig 11 is a horizontal view which schematically shows yet another embodiment for the upper structure of this invention, a honeycomb structure onto which a Fresnel-type collector is mounted.
Figs 12A and 12B are perspective views which show two alternative structures for routing fluid, i.e. water and/or steam, to and from the island 10 via a rotary joint located at the hub 18.
Fib 13A is a longitudinal view along one of the rows of Fresnel collectors, showing a rail supported cart which facilitates service and maintenance.
Fig 13B is a cross-sectional view along lines 13B-13B of Fig 13A.
Fig 14 is a perspective view which shows another aspect of the cart shown in Fig 13A.
Fig 15 is a horizontally directed, schematic view which shows the principle utilized by the structure of Figs 1-14, but with a parabolic trough used to reflect sunlight to a receiver, i.e., a heat steam generating heat pipe of the type shown in one or more of Figs 1-14.
Fig 16 is a horizontally directed schematic view, similar to Fig 15, but showing another principle for converting solar energy to usable energy, namely, an array of Fresnel lenses concentrating sunlight toward a photovoltaic panel.
Fig 17 is a horizontal view, similar to Fig 11, which schematically shows the structure relationship of the Fresnel lenses and the photovoltaic panels, according to a photovoltaic version of the present disclosure.
Figs 17A and 17B are enlarged views of a portion of Fig 17, to show variations on structure used for cooling the photovoltaic panels.
Fig 18 is a horizontally directed schematic view, similar to Figs 15 and 16, showing the principle of dynamic adjustment of the photovoltaic panels.

### Detailed Description Of The Drawings

Fig 1 shows a man-made island 10 constructed in accordance with one preferred embodiment of the invention. The island 10 generally comprises a horizontal platform 12, which in turn includes an outer support ring structure 14 that is spanned by a flexible cover 16. The cover 16 may be of any suitable flexible material that can be sealed along its opposing longitudinal edges, such as for instance by gluing, heat welding, or vulcanizing the adjacently located edges. In an initial prototype of the invention, for the cover 16 applicants are using an industrial foil known as SIKA Sarnafil TS 77-20. The island 10 includes a central hub 18 which will be described later in more detail.

The platform 12 supports a plurality of solar radiation collector modules arranged end to end in a plurality of parallel rows 19. Any given row 19 of modules includes a plurality of wire supported uprights 20, which in turn hold a horizontally oriented heat pipe 21. Each of the rows 19 includes a plurality of lower, parallel mounted solar concentrators, or reflector panels 22. Each of the concentrators 22 is fixed at a desired angle, so that all of the reflectors 22 reflect, or direct, sunlight upwardly toward the heat pipe 21. This concentrates the reflected solar radiation on the heat pipe 21. The platform 12 rotates to keep the rows 19 oriented perpendicular to the direction of the sun.

A water supply pipe and a steam pipe are routed to the central hub 18, and connect to two conduits 24 that extend in opposite directions. The conduits 24 connect to sub branches 24a that extend generally along the center of the island 10, so that in each row 19, the supply water can flow out and back along the respective heat pipe 21.

Fig 1 also shows a plurality of pods 25 distributed across the upper surface of the cover 16, in a grid pattern designated generally by reference number 26. Although not shown in particular detail in Fig 1, the pods 25 support a lightweight space frame 27, which generally occupies the spaces designated by the gridlines 26 in Fig 1. The space frame 27 in turn supports the rows 19 of solar radiation collector modules.

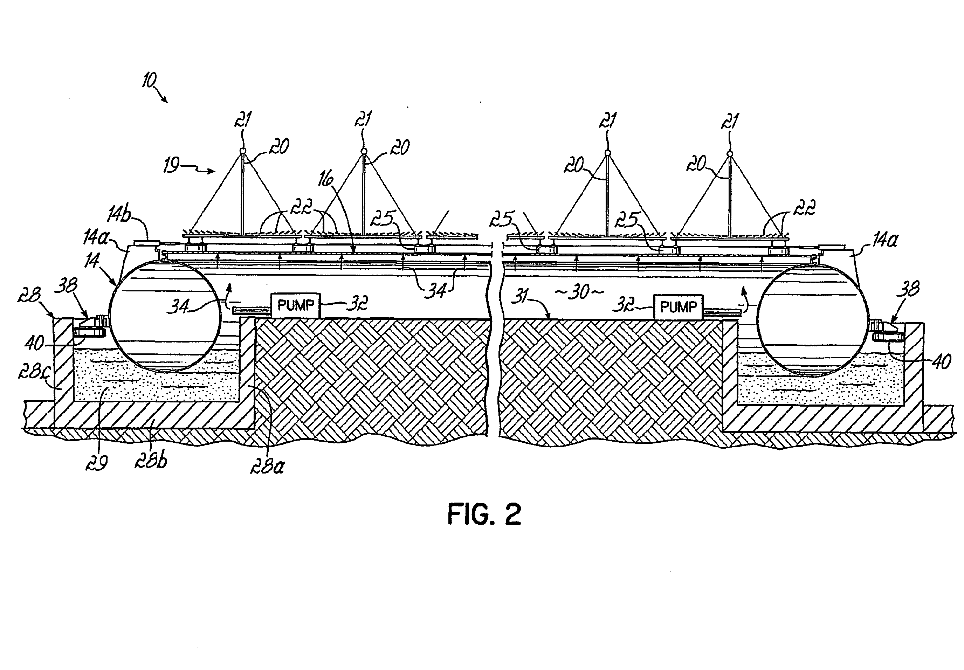

As described above, the man-made island 10 of this invention is a floating structure. This invention contemplates land-based or sea-based operation of this man-made island 10. Fig 2 shows more details of the structural components of one preferred embodiment of the man-made island 10. More particularly, Fig 2 shows the overall structure, and the manner in which the island 10 is floatably supported by the outer ring 14. Preferably, the ring 14 is made of connectable, prefabricated segments of steel, concrete, plastic, aluminum, or any other suitable material. If the segments of the ring 14 are made of steel, they preferably welded together. Particularly for a sea-based version of the island 10, the segments have internal support structures. These internal support structures isolate adjacently located segments of the ring 14, thereby to isolate adjacently located sections of the ring 14, so as to isolate any leaks that might occur. In one prototype construction of the land-based version of this island 10, the platform 12 is about 85 meters in diameter, the segments have a diameter of about two meters, and a length of about 7.5 meters. Preferably, the sections of the ring 14 are placed and interconnected while in the trench 28, and preferably supported on a temporary structure which can then be removed after the trench 28 is filled with water 29. The trench 28 must be able to support the weight of the ring 14. For the prototype, applicants estimate that the ring 14 will have a total weight of about 100 tons (100,000 kg), which corresponds to a weight of about 380 kg per square meter.

Fig 2 shows the outer ring 14 floatably located within a trench or trough 28. As shown in Fig 2, the trench has an inside wall 28a, a bottom wall 28b, and an outer wall 28c. The trench 28 is preferably made of concrete. The thickness of each of the walls 28a, 28b, and 28c is determined according to local geological surveys and any applicable building code. The trench 28 includes a fluid of suitable viscosity, and particularly a liquid such as water 29, so as to float the support ring 14.

Fig 2 also shows the enclosed volume 30 located below the cover 16, and further defined, or bounded by the ring 14, the water 29 in the trough 28, and the ground 31 or floor surface located in the center of the island 10. Preferably, the surface 31 is even with the top of the inside wall 28a. This may be done by sand-filling, and the sand then covered by PVC foil of 2 mm thickness, preferably a flexible polyolefin based foil reinforced with polyester thread and/or a fleece made of glassfibre. A compressor system 32, preferably a plurality of compressors, or pumps, is located so as to be in fluid communication with the enclosed volume 30. In Fig 2, the pump 32 is shown below the floor 31 in the middle of the island 10. Nonetheless, it could also be centrally located within an operations room or facility for operating the island 10, or even placed on the ring 14. The pump 32 pumps air into the enclosed volume 30, as shown by directional arrows 34, to maintain a suitable over-pressurization condition beneath the cover 16 and within volume 30. Applicants currently expect that the actual amount of over-pressure within the enclosed volume 30 will be about 0.005 bar, although that value may vary somewhat depending upon the dynamic conditions, and in some situations it could be substantially greater. Fig 2 also shows an upwardly extending outer rim structure 14a, which extends upwardly from each of the segments of the ring 14 to create an outer top surface 14b around the top of the ring 14.

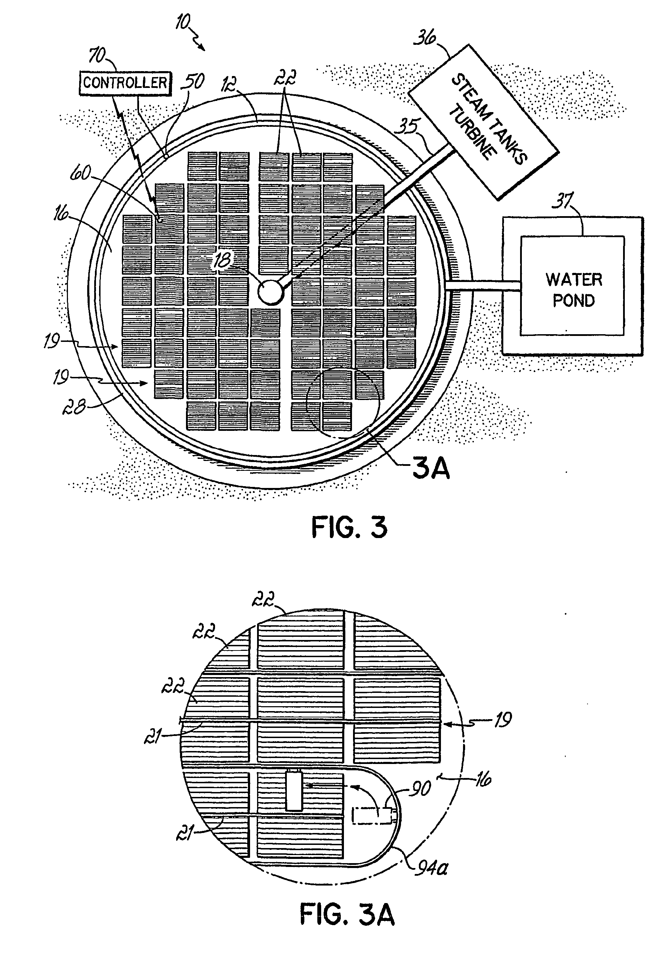

Fig 3 shows one example of the land-based version of this man-made island 10, including a radially oriented subsurface tunnel 35 that extends outwardly from the center hub 18 of the structure, beyond the outer wall 28c of the trench 28 to an energy facility 36, which may be a turbine generator or other facility for storing or using the solar generated steam produced by the island 10. Preferably, the tunnel 35 carries the water pipes which connect to the conduits 24, and also any electrical connectors. The tunnel 35 floor slopes downward from the center of the island 10, so as to extend below the bottom of the trench 28 and also to prevent any water or other liquid from flowing to the center of the island 10. A pond 37 is located nearby to supply water to the trench 28, as needed. It preferably connects to trench 28 from below, to facilitate quick draining of the trench 28.

Fig 3 also shows another view of the rows 19 of modules. Generally, for each module the concentrators 22 are about 8 meters in length.

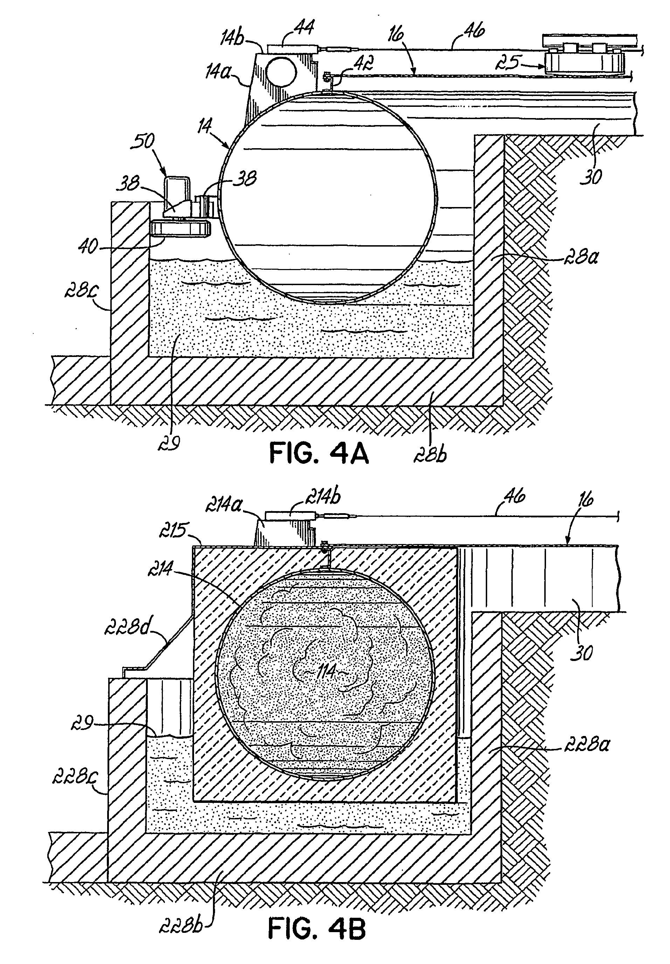

Fig 2 and also Fig 4A show details of a centering mechanism 38 that centers the island 10 on its central axis. More specifically, the centering mechanism 38 resides radially beyond the ring 14 and within the inside surface of the outer wall 28c of trench 28. This centering mechanism 38 comprises a bracket 39 mounted to the ring 14, which supports a rotatable wheel 40 that resides in contact with the outer wall 28c. It is important that the inner surface of the outer wall 28c be constructed so as to be perfectly round, or with a very low tolerance. This requirement is necessary because angular adjustment of the island 10 is achieved via these wheels 40. The invention also contemplates an alternative mounting option, that of mounting the brackets 39 on the outer wall 28c so that the wheels 40 contact the ring 14.

Although the number of wheels 40 may vary, applicants expect that twelve such wheels 40 will be needed around the circumference of the ring 14, with the wheels spaced every 30 degrees. Nonetheless, additional wheels could be used to more equally distribute the load between the outer wall 28c and the ring 14. The wheels 40 can be standard automotive wheels. Also, some of the wheels 40, preferably four, serve the additional purpose ofrotatably driving the ring 14 about its axis to a desired position, to optimize the performance of the reflectors 22. Thus, some of the wheels 40 are part of the centering mechanism and the driving mechanism. Fig 4A also shows a motor housing 50, which indicates that the wheel 40 shown is one of the four dual purpose wheels 40.

Those skilled in the art will appreciate that at any give time the force between the wheels 40 and the wall 28c will act on only one side of the ring 14, depending upon the direction of the wind. Thus, only about half of the centering wheels 40 will be used to transmit angular force to the ring relative to the outer wall 28c. Nonetheless, the outer wall 28c and its foundation must be dimensioned and reinforced so as to carry this load. If there is no wind at all, or very low wind, then all of the wheels 40 will contact the outer wall 28c and carry the rotational load, although the load will be more evenly distributed about the entire circumference of the ring 14.

Figs 4A and 4B show the outer ring structure 14, along with some of the structural details of the island 10. Due to the larger size of Fig 4A (compared to Fig 2), Fig 4A shows more clearly an outer bracket 42, preferably a steel ring torus with a U-shape, turned on its side, which secures or clamps the outer peripheral edge of the cover 16. Fig 4A also shows some aspects of an alternative structure used to support the rows 19 of solar collector modules. More particularly, Fig 4A shows details of a tensioned cable system which coacts with the pod 25. It is expected that the cable 46 will need to accommodate a tension force in the range of about 10-25 kW. More particularly, a fixed mounting support 44 holds the outer end of a tightened cable 46 which spans across the island 10 above the cover 16, in a manner which enables the pods 25 to essentially hang from, or be suspended between, the cable 46 above and the cover 16 below. Preferably, the pods 25 are adapted to accommodate the cable 46 of such a cable system and also the space frame components, to enhance versatility in constructing the island 10 and in supporting the solar collector modules.

Fig 4B is similar to Fig 4A, except Fig 4B shows another variation of the invention wherein the ring 214 stores steam 114 generated by the collector modules, and the ring 214 is encased within a square-shaped (in cross section) outer insulation section 215. Fig 4B also shows an outwardly extending skirt 228d that extends from the ring 214 to the outer wall 228c of the trench 228. This skirt 228d is usable with the other variations of the invention. The skirt 228d helps to prevent evaporation of fluid from the trough 228, and may also aid in preventing dust or other debris from falling therein.

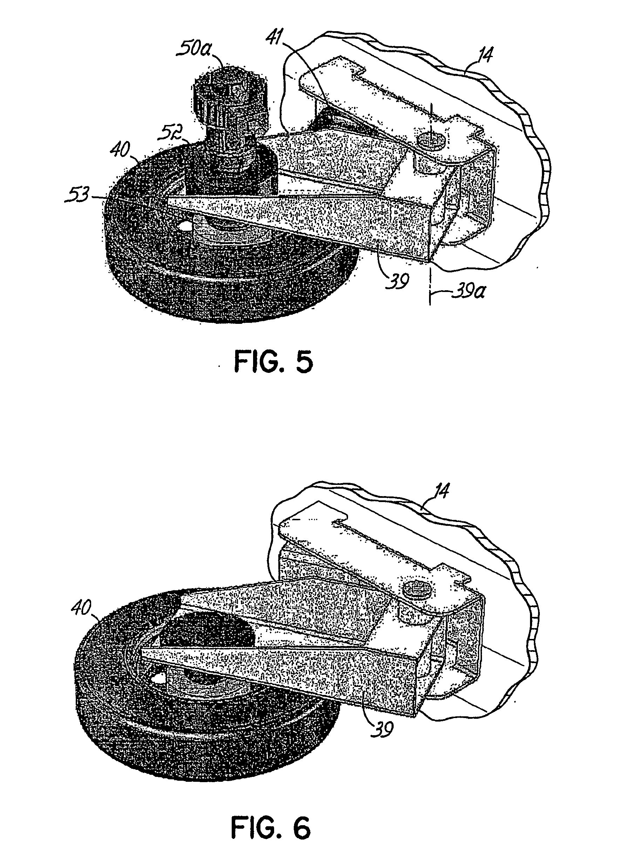

Fig 5 more clearly shows one of the centering wheels 40 that is also used to rotatably drive the island 10. This is achieved by mounting a drive mechanism, i.e. a motor 50a, to the same structure which supports a centering wheel, as shown in Fig 6.

In either case, the wheel 40 has a bracket 39 mounted to the ring 14. The bracket 39 includes a horizontally oriented hinge axis 39a, and a spring 41 that acts as a shock absorber between the hingedly connected sections of the bracket 39 (hingedly connected with respect to the axis 39a). Fig 4A shows a motor housing 50, which covers the motor 50a that is shown in Fig 5. Preferably, the drive mechanism includes a speed reducer 52 and an adapter 53 mounted to the bracket 39 with the wheel 40. Still further, as shown in Fig 3, the motor housing 50 operatively connects to a computer controller 70 via an electrical connection, to rotatably control the angular position of the island 10. This electrical connection could be wireless, if desired, or via any other suitably convenient electrical connector.

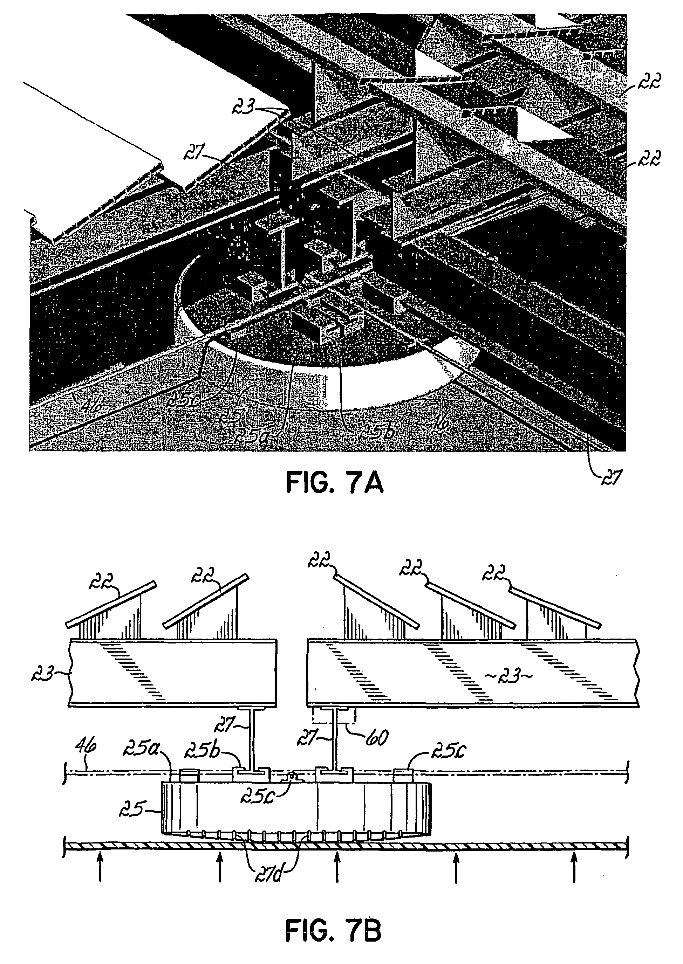

Fig 7A shows an enlarged view of one portion of this man-made island 10, and particularly a portion where a space frame 27 mounts to one of the pods 25. Fig 7A particularly shows that the space frame 27 preferably uses an I-beam construction. Fig 7A also shows that a top 25a of the pod 25 includes upwardly directed channel brackets 25b for securely holding the lower ends of the space frame 27. These brackets 25b may be part of a top piece 25a of the pod 25, in the form of a plate, to which the brackets 25b are connected by any sufficient securement mechanism. Fig 7A also shows the concentrators 22 supported on a lattice or pallet-like structure 23, which also preferably uses an I-beam construction.

In addition to the space frame 27, or as an alternative thereto, the cable system can be used for supporting the solar collector modules. Figs 7A and 7B show the cable 46 in phantom, to illustrate that it is an additional, or an alternative structure for providing support. Also, as shown in Fig 7B, the pod 25 includes upwardly extending hangers 25c which connect to the cable 46. Still further, Fig 7B shows a sensor 60, which may be a strain gauge, mounted in position to sense the strain on the space frame 27. As mentioned previously, a plurality of such sensors 60 are distributed throughout the platform 12, and are operatively connected in a network (not shown) to convey to the computer controller 70 (Fig 3) the sensed conditions. The sensors 60 may be adapted to sense any one of a number of different measurable conditions. Preferably, the controller 70 also causes the compressor system 32 to respond appropriately to the sensed conditions, by dynamically adjusting the amount of over-pressurization.

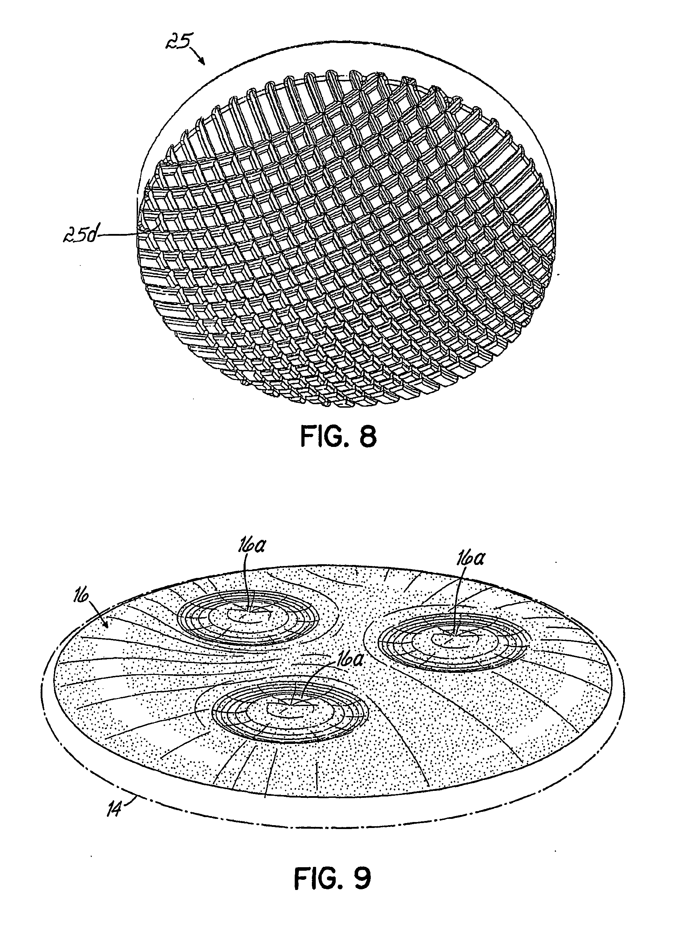

Fig 8 shows a bottom profiled surface 25d of pod 25. Fig 9 is a computer simulated view of the cover 16, with three noticeable dimples, or depressions, as a result of the load supported thereabove. These dimples are designated via reference numerals 16a, 16b, and 16c. They show the need for dynamic over-pressurization and strain sensing to achieve a relatively flat, or at least undimpled surface.

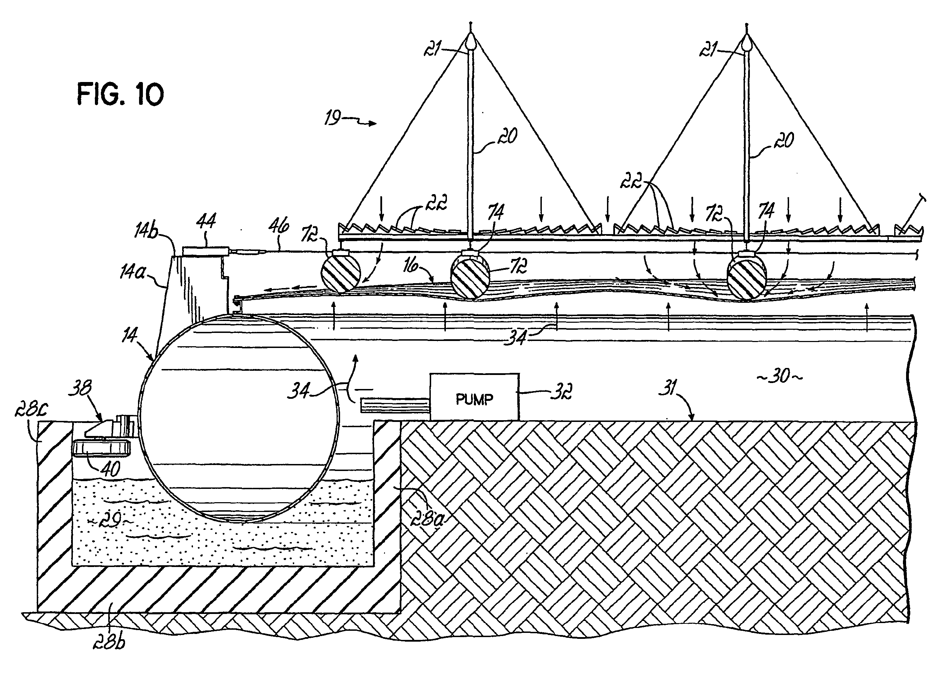

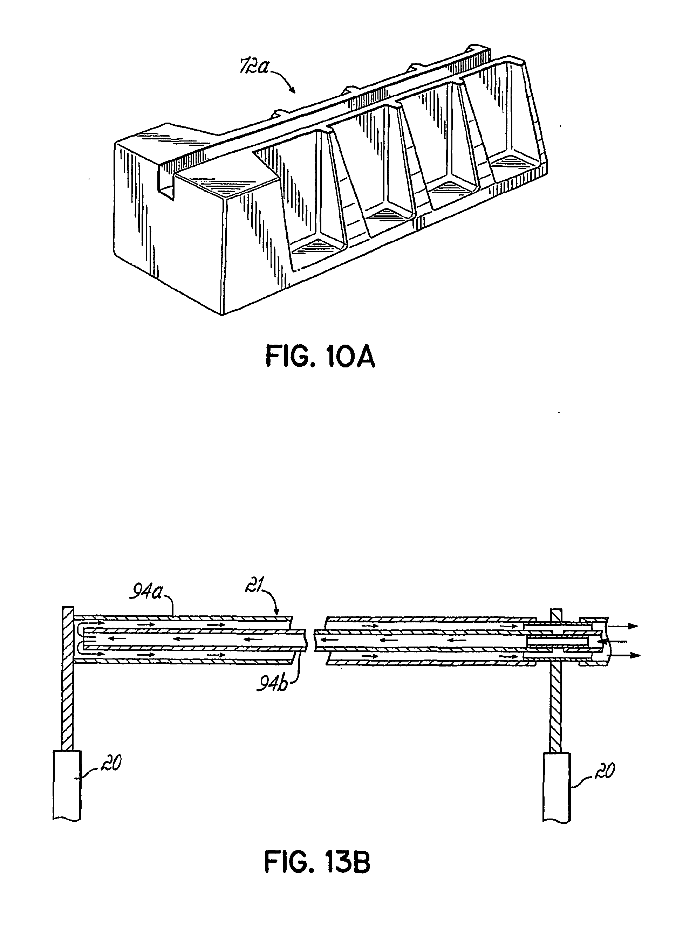

Fig 10 is similar to Figs 4A and 4B, but shows more details of the cable and pontoon structure used to support the rows 19 of solar collector modules. In this particular embodiment of the invention, the cable 46 spans across the top of the cover 16, transversely across a plurality of pontoons 72 which are arranged in parallel rows on the cover 16. The pontoons 72 can be made of plastic or any other suitable lightweight material. Applicants contemplate using pontoons of the type industrially manufactured and distributed by e.g. Robin Kunstoffprodukte, of Teterow, Germany and Technus KG (GmbH and Co.), also of Teterow, Germany. Preferably, the cable 46 engages a plurality of braces, or boards 74, supported on top of the pontoons 72 (or rows of pontoons). The boards 74 support the lattice 23 which holds the solar concentrators 22. Fig 10 shows depressions formed in cover 16 alongside the pontoons 72. These parallel depressions facilitate the runoff of rainwater, and also eliminate a centrally located bulge that could result from the over-pressurization. Surface runoff may be more controllable because it will generally flow to these known depressions.

Fig 10A shows another version of the pontoon, designated by reference numeral 72a. This pontoon 72a has a formed, preferably molded, top surface structure designed to facilitate holding of the upper structure and/or other structure which supports the modules.

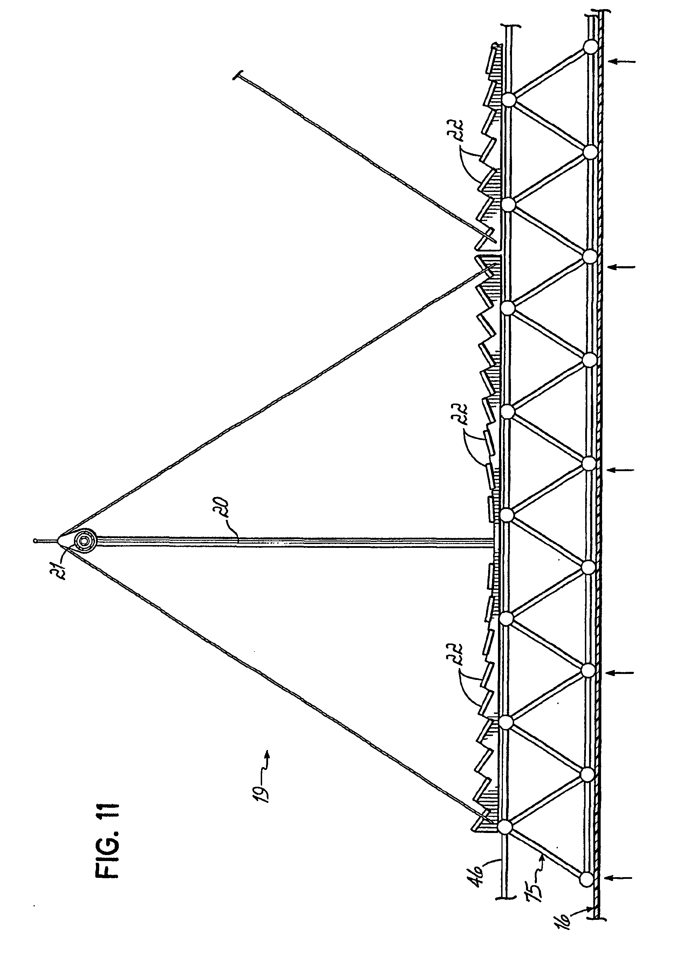

Fig 11 shows a side view of yet another embodiment of the upper structure used to support the solar radiation collectors. More particularly, Fig 11 shows a honeycomb-type structure 75 residing between the cover 16 and the solar collectors 22c and also supported by cable 46.

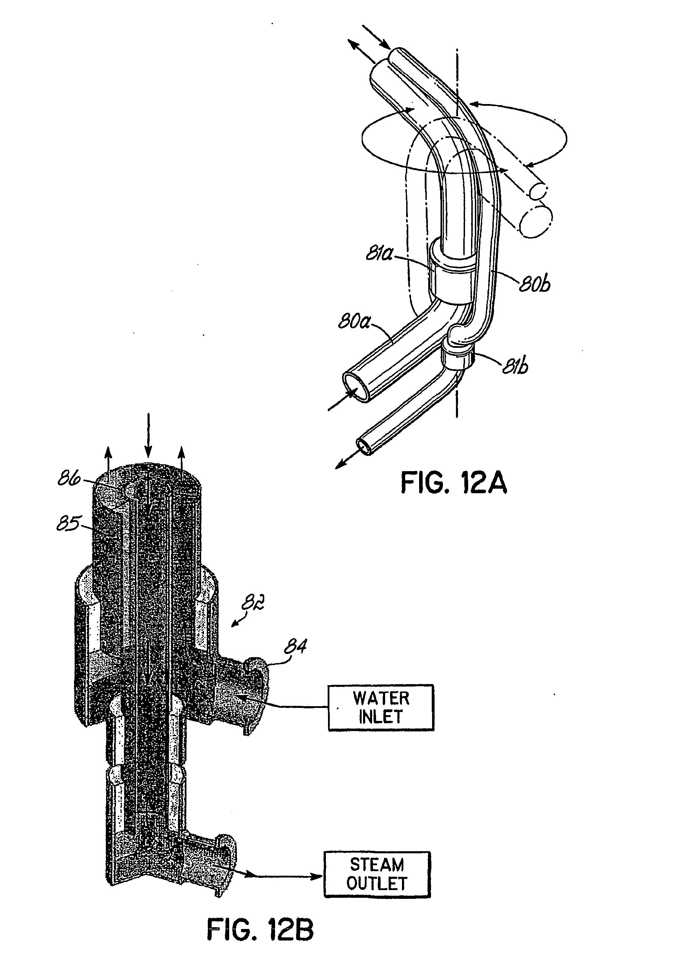

Figs 12A and 12B show variations on the rotary joint for use at the center hub 18 of the island 10. More particularly, Fig 12A shows an inlet pipe and an outlet pipe, designated 80a and 80b respectively, both of which include a respective sleeve 81a and 81b, which permits some relative rotation between the upper and lower sections thereof, at least in the range of about 240 to 260 degrees. Fig 12 B shows a coaxial version 82 of the rotary joint. More particularly, water inlet 84 supplies water to an outer annularly shaped flow passage within outer pipe 85, for water flowing toward the solar collector modules. After the water has been heated and steam has been created, it returns via central heat pipe 86 (which is rotatable with respect to outer pipe 85 and to the inlet 84). The steam generated via the solar collectors eventually flows toward the bottom of the rotary joint 82 and exits the joint via a steam outlet 88.

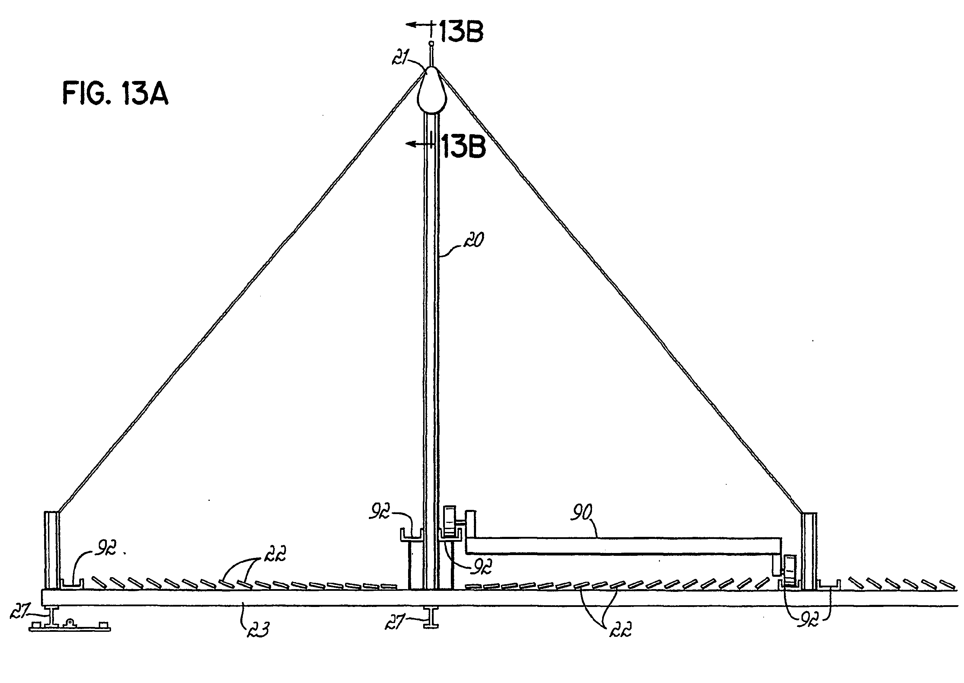

Figs 13A and 13B show two additional features of the invention. More particularly, Fig 13A shows a wheel supported cart 90 which rolls along a pair of spaced rails 92 arranged parallel with the rows 19 of the solar collector modules. This facilitates maintenance of the collectors, and does so in a manner that does not interfere with the solar collection structure.

Fig 13B shows one embodiment for incorporating a preheating feature into this invention. More particularly, Fig 13B shows the uprights 20 of one of the rows 19 of solar collector modules, and the heat pipe 21 configured as a coaxial pipe structure 94 that spans between the uprights 20. More particularly, the pipe structure 94 is a coaxial pipe with an outer annular channel 94a and a centrally located inner channel 94b. With the panels 22 of the solar collector modules concentrating and directing the sunlight upwardly, water flowing outbound (to the left in Fig 13B) via central channel 94b is preheated by the heat emanating from steam flowing in the outer channel 94a (which is flowing to the right in Fig 13B). The outer channel 94a receives the greatest concentration of redirected radiation from the sunlight. Thus, the heated steam within channel 94a also causes heat to emanate radially inwardly to preheat the fluid flowing in the inner channel 94b. This same principle could be used with an upper outbound channel 94a and a lower return (steam generating) channel 94b, if the coaxial version of this piping structure proves too cumbersome or too expensive to manufacture or install.

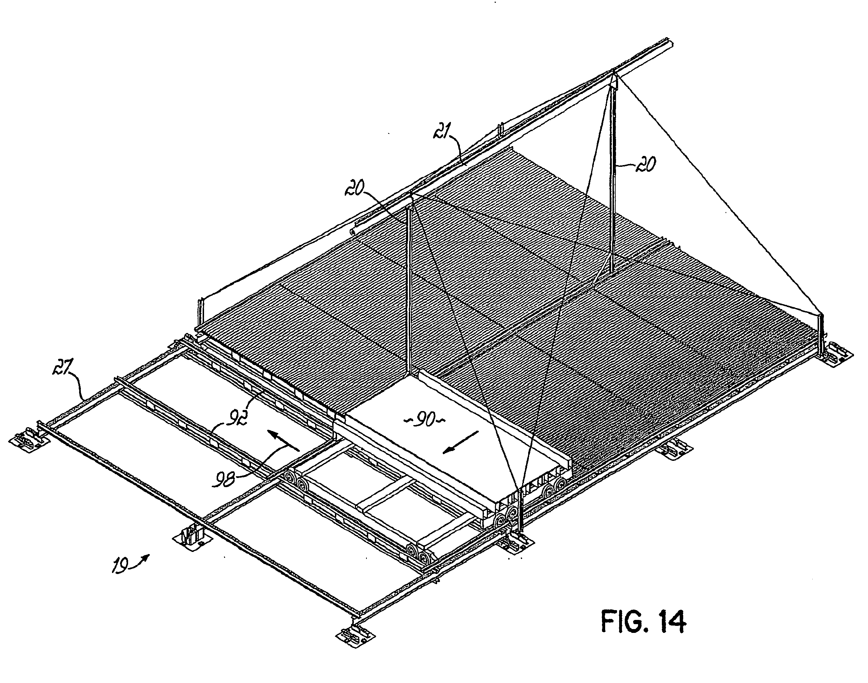

Fig 14 shows the capability for the cart 90 to move laterally along, or transversely to one of the rows 19 of solar collectors, at the end of the row 19, as shown by directional arrow 97, along a transversely directed track. This enables the cart 90 to service the entire surface area of the cover 16 occupied by the rows 19 solar collector modules. As shown in Fig 3A, adjacent row 19 access could also be obtained by adding an outer half circular track 94a to connect adjacently located rows. These connector tanks can be removable, for temporary use, to accommodate multiple rows 19. The type of structure can be used for regular servicing of the island 10, for example, for cleaning the panels 22 of the solar collector modules.

One embodiment of the invention contemplates that the outer ring structure, in the case of the water-deployed man-made island, would contain a hydrogen production facility in a hermetically sealed pipe section attached under the outer ring structure. Such a hydrogen production facility could be completely submerged, and run in a way that the electrolysis generator could operate in an evacuated or an inert gas environment, thereby to substantially reduce any potential accident risks. It is also envisaged to use two concentric pipe sections in the construction of such a hydrogen production facility - in other words the electrolysis generator would then be housed in a double-walled structure.

Hydrogen production and distribution facilities are generally not considered to be dangerous; they are not systematically prone to risks of uncontrolled combustion. However, as **http://www.eihp.org/public/Reports//Final Report/Sub-Task Reports/ST5.2/RISK%20ASSESSMENTS%20OF%20H2-REFUELLING%20STATION Onsite %20CONCEPTS.pdf** shows, these facilities require frequent maintenance and ongoing surveillance in order to effectively control such risks. An evacuated environment or an environment filled with inert gas would substantially reduce those risks, as hydrogen and oxygen gas sensors would immediately warn about the risk of a leak developing. For regular maintenance every few months, the hydrogen production facility can be shut off and outside air pumped in before the maintenance crews enter the scene.

For the land-based version of the man-made island, the hydrogen generation facility would be constructed at a sufficient distance from the solar island to prevent any potential hazardous exposure.

Generally, up to this point of the detailed description, the structure shown and described for converting solar energy to usable energy has been a heat pipe 21 for generating steam from reflectors 22a, as shown schematically in Fig 15. As an alternative, Fig 16 shows the integration of photovoltaic solar energy conversion into the solar island concept. More particularly, support structure 420 is adapted and used to hang a photovoltaic panel 421 at an appropriate angle to obtain a maximum concentration effect through an array of lower located linear Fresnel lenses 422. The arrows of Fig 16 show reflection of sunlight from Fresnel lenses 422 to photovoltaic panel 421, which is mounted to a backing 431.

It is believed that where the linear Fresnel type lenses 422 have a size of approximately 8 by 8 meters, a concentration factor of 10 can be achieved. Thus, peak solar radiation received by the photovoltaic modules per square meter would no longer be on the order of 1 kW, but 10 kW per square meter. Thus, a solar island 10 could use conventional photovoltaic modules as part of the photovoltaic panels 421 as long as the modules are sufficiently cooled, so as to not overheat, to maintain reasonable conversion efficiencies, and to maintain reasonable photovoltaic module lifetime. Potentially, the output of such a solar island could be raised further by using special photovoltaic cell material that is designed to work in concentrating applications. Using this approach, the active photovoltaic module surface could be reduced, thereby also reducing any undesired shading effects on the concentrator surface. A person skilled in the art will be able to optimize the solar island design by adapting the size of the active cell surface versus increased cell price and potentially increased electrical output depending on the primary solar radiation obtained at the location of an inventive solar island installation. An overview into solar cell technology used for concentrator applications is given in.

Because the temperature level generated in and around the photovoltaic panels 421 is going to be much higher than in most ordinary photovoltaic applications, due to the above-described concentration effect, the present invention contemplates incorporating a cooling device into the overall support and mounting structure 420. More particularly, it has been shown that the conversion efficiency of photovoltaic panels is reduced by up to about 50 percent when the temperature of the photovoltaic cells rises over certain levels, i.e., when cell temperatures ofmore than 130 degrees Centigrade are achieved. See in particular discussing some of the reasons for this finding and also showing one possible approach into effective cooling of photovoltaic modules. An overview of possible cooling applications and their respective effect on photovoltaic efficiency is shown in Roennelid, M., Perers, B.; Active Cooling of Low-Concentrating Hybrid PV/Thermal Collectors, Paper presented at NorthSun '99, Edmonton, Alberta, Canada, August 11-14, 1999. One option for cooling could involve using some of the heat pipe network 21 described with respect to Figs 1-14. In that case, the energy collected through such piping network could be made available for off-island use (heating and warm-water supply, air-conditioning or more generally cooling applications through the use of absorption chillers, process energy in industrial applications, etc.)

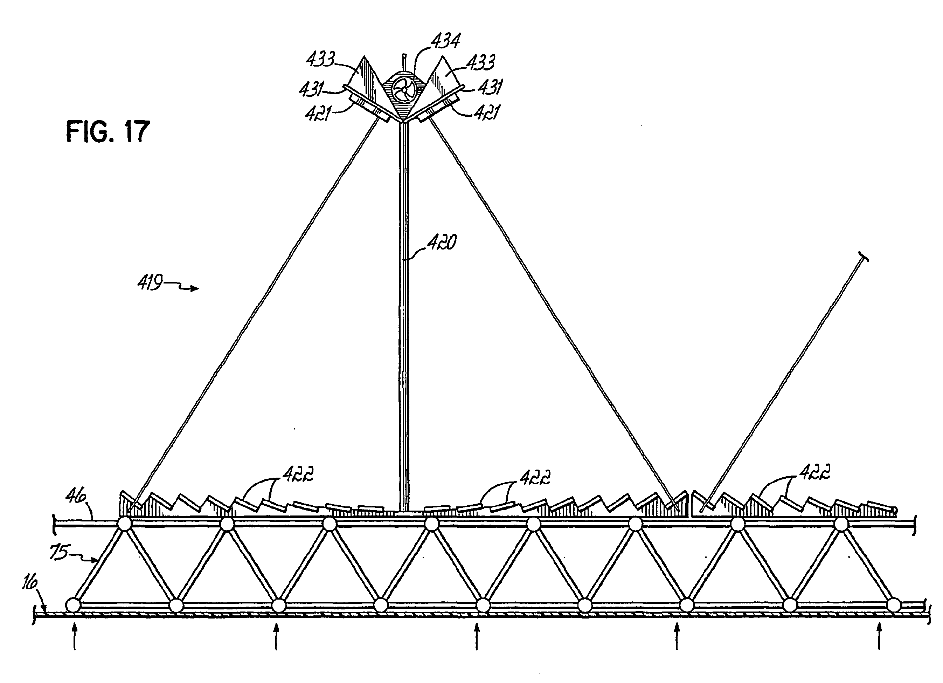

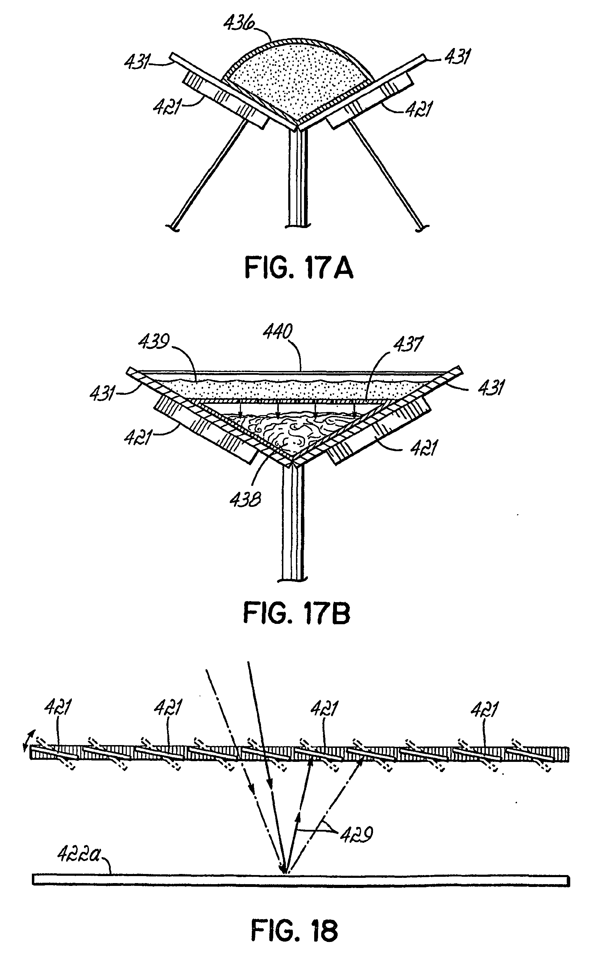

Fig 17 shows details of one photovoltaic version of the solar island 10, with 400 series numbers used to identify photovoltaic components, to differentiate them from the structure described with respect to Figs 1-14. Similar to the arrangement shown in Fig 1, the entire solar island 10 can be equipped with rows 419 of linear Fresnel concentrator lenses 422 and support beams 420 equipped with brackets 431 that hold the photovoltaic collectors 421 above the lenses 422 at appropriate angles so as to maximize the power output of the photovoltaic panels 421. As indicated by Fig 16, the configuration can be realized in an asymmetrical manner, i.e., with the Fresnel concentrator lenses 422 on only one side of the support beam 420 that holds the photovoltaic panel 421. Alternatively, a symmetrical configuration can be used, as shown in Figs 17, 17A, and 17B, wherein two photovoltaic panels 421 are held in a V-shape by the support beam 420 and brackets 431, in the center of an array of fully symmetrical Fresnel concentrator lenses 422.

The structures shown in Figs 17, 17A, and 17B, with photovoltaic panels 42 1 mounted in this V-configuration, offer several options for employing cooling features. For instance, as shown in Fig 17, cooling fins 433 can be integrated into the backsides of the brackets 431. Moreover, a fan 434 can be directed along the V-shape, as shown in Fig 17, to increase the amount of convection over the cooling fins 433 and/or the backsides of the photovoltaic panels 421 themselves. The operation of the fan 434 could be coordinated by a control system (not shown). Alternatively, heat exchangers could be installed on the backside of the supports 431, in the form of an arcuately shaped pipe 436 in direct contact with the supports 431, as shown in Fig 17A. Still further, a conduit 437 having a triangular cross sectional shape, to match the V-shape of the brackets 431, could be supported by the brackets 431. This conduit 437 could hold a bundle of fibers 438.

By filling this conduit 437 with lightweight fibers 438, i.e., natural fibers like coconut (one example is the so-called aspen fibre, see e.g.,) or synthetic fibers with similar or even improved properties, such fibers 438 can be soaked with water at regular intervals, or whenever the fibers 438 become too dry, to cause evaporative cooling. A soaking system for such fibers 438 may include a system of water-hoses and spray jets, essentially of the type frequently used in landscaping. Also, moisture sensors (not shown) could be located along the conduits 437, to sense any drying out of the fibers 438 and to activate water flow.

According to one aspect of this cooling option, the conduit 437 could have openings to enable the fibers 438 to be soaked merely by periodically filling water into the V-shaped trench defined by the brackets 431. This is shown via water line 439, and the directional arrows.

In the variations described above it is also contemplated to use sun-shading elements over the photovoltaic modules, to decrease the backside temperature of the photovoltaic panels 421 while generally improving the cooling effect achieved by the various solutions described. This can be accomplished in any one of a number of ways. One way is via a cover 440 of the type shown in Fig 17B.

This approach to photovoltaic cooling is useful in moderate climates where the photovoltaic modules receiving irradiation from concentrating mirror assemblies do not experience extremely high temperatures. In such conditions, the embodiments described avoid the need for a full-scale piping and heat exchanger system, as would otherwise be required.

In the case of the off-shore version of this solar island, the cooling system could make use of the fact that sea water temperature decreases with depth. A typical ocean water temperature profile can be seen at. An off-shore version of this solar island that is deployed in the warm ocean waters close to the equator (the Persian Gulf -the warmest ocean water body on the globe-can reach up to 36 degrees Centigrade,--or approximately 97 degrees Fahrenheit during summer periods)-and could be equipped with a full heat exchanger system that would be solidly fixed to the backsides of all brackets 431 supporting the photovoltaic modules 421. This heat-exchanger system could be run in a closed loop with another heat exchanger system that is hung at significant depths, as the temperature of ocean water typically decreases by about 10 degrees Centigrade over a depth of 500 meters. Even shallow ocean water bodies show significant temperature drops in depths as small as 100 meters.

It has been shown in a number of technical implementations around the world that pumping deep sea water from significant depths for use in cooling applications is both technically as well as economically feasible. The pumping losses such systems have to overcome are moderate, as shown by the installation of an S WAC (Sea Water Air Conditioning) system at the Natural Energy Laboratory on the Hawaiian island of Kona (see). The volume stream needed at this installation is being pumped from depths of 2200 feet, and the total electrical power installed to overcome pumping losses is below 20 kW. Thus, this technical solution could be employed within the context of the photovoltaic solar island, for cooling the photovoltaic panels 421.

In a further aspect of this invention, each of the individual photovoltaic panels 421 could be rotatable, or reorientable, about a corresponding horizontal axis. This is shown in Fig 18. When mounted opposite an appropriately located flat concentrator designated 422a, this rotation enables the panel 421 to be oriented 90° with respect to the reflected sunlight, as shown by directional arrows 429 and the phantom lines for the panels 421. This structure further increases the radiation concentration effect. This dynamic adjustment of the photovoltaic panels 421 may be achieved through micro-positioning motors (not shown) and an appropriate computer system using an algorithm suited to this purpose (not shown).

It is envisaged that the dynamic angular adjustment of the solar island 10 will already achieve massive power gains and that therefore the inventive solution shown in Fig 18 will likely only be applicable to solar island installations that are far away from the equator, and that may see a higher percentage of hours of operation under cloud cover.

While this specification describes a number of preferred embodiments and other variations of the invention, those skilled in the art will appreciate that the particular structures shown and described are susceptible to a reasonable degree of modification, and hence, the invention is not limited in scope to the specific details shown and described. Applications wish only to be limited by the broadest reasonable interpretation of the following claims.

## Claims

1. A solar energy collection system comprising:
- a platform (12) floating above a body of fluid, the platform including an outer ring structure (14); a flexible cover (16) that defines an enclosed volume below the cover; (16) - a compressor (32) or blower for creating an over-pressure condition within the enclosed volume;
- an upper structure located above the cover;
- an array of linear Fresnel lenses (422) supported by the upper structure and providing concentration of solar radiation;
- an array of photovoltaic solar collectors (421) supported above the cover so as to receive solar radiation concentrated by the Fresnel lenses; and
- the platform being rotatable about a center vertical axis thereof, thereby to enable the orientation of the array of linear Fresnel lenses and the corresponding photovoltaic solar collectors to be rotated to a desired orientation depending on the angular position of the sun,
**characterized in that** the flexible cover (16) sealingly encloses a top end of the outer ring structure, thereby to define the enclosed volume below the cover

2. The solar energy collection system of claim 1 **characterized in that** the system is land-based and further comprises:
- a lower ring-shaped trough (28) residing below the outer ring structure and adapted to hold a fluid of suitable viscosity, thereby to floatably support the outer ring structure on the fluid within the trough.

3. The solar energy collection system of any previous claim further **characterized in that** it comprises:
- a number of cooling devices associated with the array of photovoltaic solar collectors (421), the cooling devices integrated into a cooling system adapted to coordinate cooling of the photovoltaic solar collectors supported on the platform.

4. The solar energy collection system of any previous claim, **characterized in that** it further comprises:
- a suitable number of cooling fins mounted to the photovoltaic solar collectors.

5. The solar energy collection system of claim 4 **characterized in that** it further comprises:
- a fan (434) operatively associated with a plurality of the cooling fins (433) to promote heat convection by said cooling fins.

6. The solar energy collection system of any previous claim, **characterized in that** it further comprises:
- a closed loop system of heat exchangers operatively associated with the array of photovoltaic solar collectors, the heat exchangers adapted to receive cooling fluid from a source and to cool the photovoltaic solar collectors.

7. The solar energy collection system of any previous claim, **characterized in that** it further comprises:
- a V-shaped basin defined at least in part by adjacently located backsides of appropriately mounted photovoltaic solar collectors.

8. The solar energy collection system of claim 7, **characterized in that** it further comprises:
- at least one moistenable fiber (438) located within the V-shaped basin and suitable for being soaked so as to evaporatively cool the corresponding photovoltaic solar collectors.

9. The solar energy collection system of claim 8, **characterized in that** it further comprises:
- a moisture control system operatively connected to the at least one fiber, the control system adapted to sense moisture and to maintain a suitable level of moisture with respect to the at least one fiber (438), thereby to cool the photovoltaic solar collectors associated therewith.

10. The solar energy collection system of any previous claims, **characterized in that** it further comprises:
- a pipe system including pipes to supply deep sea water to the cooling devices.

11. The solar energy collection system of any of the previous claims, and **characterized in that** it further comprises:
- a cover for shading the photovoltaic solar collectors and/or the cooling devices from direct solar radiation, thereby to enhance the cooling effect.

12. The solar energy collection system of any of the previous claims, and **characterized in that** it further comprises:
- a suitable number of pivotal mounts associated with the photovoltaic solar collectors (421), thereby to permit controllable adjustment of the photovoltaic solar collectors so as to maintain an optimal angle with respect to the corresponding Fresnel lenses.

13. The solar energy collection system of claim 1, **characterized in that** it comprises
- a plurality of rows of brackets (431) supported above the cover, and **in that** said photovoltaic solar collectors (421) are held by the brackets so as to be facing the Fresnel lenses (422).

14. The solar energy collector system of claim 13 **characterized in that** at least some of
the brackets define a V-shape that holds a pair of rows of photovoltaic solar collectors, and further comprising:
- a cooling device residing in the V-shape.

15. The solar energy collector system of either claim 13 or 14, and **characterized in that**
it further comprises :
- at least one moistenable fiber (438) located adjacent one of the brackets, the fiber being suitable for being soaked so as to evaporatively cool a corresponding photovoltaic solar collector mounted on the underside of the respective bracket; and
- a moisture control system operatively connected to the at least one moistenable fiber, the moisture control system adapted to sense moisture and to maintain a suitable level of moisture with respect to the at least one moistenable fiber (438), thereby to cool the photovoltaic solar collector associated therewith.

## Patentansprüche

1. Solarenergiesammelsystem, umfassend:
- eine Plattform (12), die oberhalb eines Flüssigkeitskörpers schwimmt, wobei die Plattform eine äußere Ringstruktur (14) umfasst;
- eine flexible Abdeckung (16), die ein umschlossenes Volumen unterhalb der Abdeckung (16) definiert;
- einen Kompressor (32) oder ein Gebläse zum Schaffen eines Überdruckzustands innerhalb des umschlossenen Volumens;
- eine obere Struktur, die oberhalb der Abdeckung angeordnet ist;
- eine Anordnung von linearen Fresnel-Linsen (422), die von der oberen Struktur getragen werden und eine Konzentration von Solarstrahlung bereitstellen;
- eine Anordnung von photovoltaischen Solarkollektoren (421), die oberhalb der Abdeckung getragen werden, um von den Fresnel-Linsen konzentrierte Solarstrahlung zu empfangen; und
- wobei die Plattform um eine vertikale Mittelachse davon drehbar ist, um dadurch zu ermöglichen, dass die Anordnung von linearen Fresnel-Linsen ausgerichtet wird und die entsprechenden photovoltaischen Solarkollektoren je nach Winkelposition der Sonne in eine gewünschte Ausrichtung gedreht werden können,
**dadurch gekennzeichnet, dass** die flexible Abdeckung (16) ein oberes Ende der äußeren Ringstruktur versiegelnd umschließt, um dadurch das umschlossene Volumen unterhalb der Abdeckung zu definieren.

2. Solarenergiesammelsystem nach Anspruch 1, **dadurch gekennzeichnet, dass** das System landbasiert ist und ferner umfasst:
- eine untere ringförmige Wanne (28), die unterhalb der äußeren Ringstruktur angeordnet und eingerichtet ist, um eine Flüssigkeit mit geeigneter Viskosität zu halten, um dadurch die äußere Ringstruktur schwimmend auf der Flüssigkeit innerhalb der Wanne zu tragen.

3. Solarenergiesammelsystem nach einem vorstehenden Anspruch, ferner **dadurch gekennzeichnet, dass** es umfasst:
- eine Reihe von Kühlvorrichtungen, die mit der Anordnung von photovoltaischen Solarkollektoren (421) assoziiert sind, wobei die Kühlvorrichtungen in ein Kühlsystem integriert sind, das eingerichtet ist, um die Kühlung der auf der Plattform getragenen photovoltaischen Solarkollektoren zu koordinieren.

4. Solarenergiesammelsystem nach einem vorstehenden Anspruch, **dadurch gekennzeichnet, dass** es ferner umfasst
- eine geeignete Anzahl an Kühllamellen, die an den photovoltaischen Solarkollektoren befestigt sind.

5. Solarenergiesammelsystem nach Anspruch 4, **dadurch gekennzeichnet, dass** es ferner umfasst:
- einen Lüfter (434), der mit einer Mehrzahl von Kühllamellen (433) betriebsmäßig verbunden ist, um die Wärmekonvektion durch die Kühllamellen zu fördern.

6. Solarenergiesammelsystem nach einem vorstehenden Anspruch, **dadurch gekennzeichnet, dass** es ferner umfasst:
- ein geschlossenes Regelkreissystem aus Wärmeaustauschern, die mit der Anordnung von photovoltaischen Solarkollektoren betriebsmäßig verbunden sind, wobei die Wärmeraustauscher eingerichtet sind, um Kühlflüssigkeit von einer Quelle zu erhalten und die photovoltaischen Solarkollektoren zu kühlen.

7. Solarenergiesammelsystem nach einem vorstehenden Anspruch, **dadurch gekennzeichnet, dass** es ferner umfasst:
- ein V-förmiges Becken, das zumindest teilweise durch benachbart angeordnete Rückseiten von entsprechend befestigten photovoltaischen Solarkollektoren definiert ist.

8. Solarenergiesammelsystem nach Anspruch 7, **dadurch gekennzeichnet, dass** es ferner umfasst:
- zumindest eine befeuchtbare Faser (438), die innerhalb des V-förmigen Beckens angeordnet und geeignet ist, um getränkt zu werden, um die entsprechenden photovoltaischen Solarkollektoren einer Verdunstkühlung zu unterziehen.

9. Solarenergiesammelsystem nach Anspruch 8, **dadurch gekennzeichnet, dass** es ferner umfasst:
- ein Feuchtigkeitsregulierungssystem, das mit der zumindest einen Faser betriebsmäßig verbunden ist, wobei das Regulierungssystem eingerichtet ist, um Feuchtigkeit zu detektieren und einen geeigneten Feuchtigkeitsgehalt in Bezug auf die zumindest eine Faser (438) zu halten, um dadurch die damit verbundenen photovoltaischen Solarkollektoren zu kühlen.

10. Solarsammelsystem nach den vorstehenden Ansprüchen, **dadurch gekennzeichnet, dass** es ferner umfasst:
- ein Rohrsystem, das Rohre enthält, um die Kühlvorrichtungen mit Meerestiefenwasser zu versorgen.

11. Solarenergiesammelsystem nach einem der vorstehenden Ansprüche, **dadurch gekennzeichnet, dass** es ferner umfasst:
- eine Abdeckung, um die photovoltaischen Solarkollektoren und/oder die Kühlvorrichtungen gegenüber direkter Sonnenstrahlung abzuschirmen, um dadurch den Kühleffekt zu verbessern.

12. Solarenergiesammelsystem nach einem der vorstehenden Ansprüche, **dadurch gekennzeichnet, dass** es ferner umfasst:
- eine geeignete Anzahl an Schwenkmontagen, die mit den photovoltaischen Solarkollektoren (421) verbunden sind, um dadurch eine steuerbare Einstellung der photovoltaischen Solarkollektoren zu ermöglichen, um einen optimalen Winkel in Bezug auf die entsprechenden Fresnel-Linsen zu halten.

13. Solarenergiesammelsystem nach Anspruch 1, **dadurch gekennzeichnet, dass** es umfasst:
- eine Mehrzahl von Reihen von Klammern (431), die oberhalb der Abdeckung getragen werden, und dass die photovoltaischen Solarkollektoren (421) von diesen Klammern gehalten werden, um den Fresnel-Linsen (422) zugewandt zu sein.

14. Solarenergiekollektorsystem nach Anspruch 13, **dadurch gekennzeichnet, dass** zumindest einige der Klammern eine V-Form definieren, die ein Paar von Reihen von photovoltaischen Solarkollektoren hält, und ferner umfassend:
- eine Kühlvorrichtung, die in der V-Form angeordnet ist.

15. Solarenergiekollektorsystem nach Anspruch 13 oder 14, **dadurch gekennzeichnet, dass** es ferner umfasst:
- zumindest eine befeuchtbare Faser (438), die benachbart einer der Klammern angeordnet ist, wobei die Faser geeignet ist, um getränkt zu werden, um einen entsprechenden photovoltaischen Solarkollektor, der an der Unterseite der jeweiligen Klammer angebracht ist, einer Verdunstkühlung zu unterziehen; und
- ein Feuchtigkeitsregulierungssystem, das mit der zumindest einen befeuchtbaren Faser betriebsmäßig verbunden ist, wobei das Feuchtigkeitsregulierungssystem eingerichtet ist, um Feuchtigkeit zu detektieren und einen geeigneten Feuchtigkeitsgehalt in Bezug auf die zumindest eine befeuchtbare Faser (438) zu halten, um dadurch die damit verbundenen photovoltaischen Solarkollektoren zu kühlen.

## Revendications

1. Système de collecte d'énergie solaire, comprenant :
- une plateforme (12) flottant au-dessus d'un corps de fluide, la plateforme comprenant une structure annulaire extérieure (14) ;
- un capot flexible (16) qui définit un volume enfermé au-dessous du capot (16) ;
- un compresseur (32) ou un ventilateur pour créer une condition de surpression dans le volume enfermé ;
- une structure supérieure située au-dessus du capot ;
- un réseau de lentilles de Fresnel linéaires (422) supporté par la structure supérieure et réalisant une concentration du rayonnement solaire ;
- un réseau de collecteurs solaires photovoltaïques (421) supporté au-dessus du capot de manière à recevoir le rayonnement solaire concentré par les lentilles de Fresnel ; et
- la plateforme étant capable de tourner autour d'un axe vertical central de celle-ci, pour permettre de ce fait l'orientation du réseau de lentilles de Fresnel linéaires et la rotation des collecteurs solaires photovoltaïques correspondants dans une orientation souhaitée en fonction de la position angulaire du soleil,
**caractérisé en ce que** le capot flexible (16) enferme de manière étanche une extrémité supérieure de la structure annulaire extérieure, pour définir de ce fait le volume enfermé au-dessous du capot.

2. Système de collecte d'énergie solaire selon la revendication 1, **caractérisé en ce que** le système est terrestre et comprend en outre :
- une cuve inférieure de forme annulaire (28) résidant au-dessous de la structure annulaire extérieure et conçue pour contenir un fluide de viscosité appropriée, pour supporter de ce fait de manière flottante la structure annulaire extérieure sur le fluide dans la cuve.

3. Système de collecte d'énergie solaire selon l'une quelconque des revendications précédentes, **caractérisé en outre en ce qu'**il comprend :
- un certain nombre de dispositifs de refroidissement associés au réseau de collecteurs solaires photovoltaïques (421), les dispositifs de refroidissement étant intégrés dans un système de refroidissement conçu pour coordonner le refroidissement des collecteurs solaires photovoltaïques supportés sur la plateforme.

4. Système de collecte d'énergie solaire selon l'une quelconque des revendications précédentes, **caractérisé en ce qu'**il comprend en outre :
- un nombre approprié d'ailettes de refroidissement montées sur les collecteurs solaires photovoltaïques.

5. Système de collecte d'énergie solaire selon la revendication 4, **caractérisé en ce qu'**il comprend en outre :
- un ventilateur (434) associé de manière fonctionnelle à une pluralité d' ailettes de refroidissement (433) pour favoriser la convection thermique par lesdites ailettes de refroidissement.

6. Système de collecte d'énergie solaire selon l'une quelconque des revendications précédentes, **caractérisé en ce qu'**il comprend en outre :
- un système en boucle fermée d'échangeurs thermiques associés de manière fonctionnelle au réseau de collecteurs solaires photovoltaïques, les échangeurs thermiques étant conçus pour recevoir un fluide de refroidissement d'une source et pour refroidir les collecteurs solaires photovoltaïques.

7. Système de collecte d'énergie solaire selon l'une quelconque des revendications précédentes, **caractérisé en ce qu'**il comprend en outre :
- une cuvette en forme de V définie au moins en partie par les côtés arrière situés de manière adjacente de collecteurs solaires photovoltaïques montés de manière appropriée.

8. Système de collecte d'énergie solaire selon la revendication 7, **caractérisé en ce qu'**il comprend en outre :
- au moins une fibre humidifiable (438) située dans la cuvette en forme de V et appropriée pour être imbibée de manière à refroidir par évaporation les collecteurs solaires photovoltaïques correspondants.

9. Système de collecte d'énergie solaire selon la revendication 8, **caractérisé en ce qu'**il comprend en outre :
- un système de régulation d'humidité relié de manière opérationnelle à ladite au moins une fibre, le système de régulation étant conçu pour détecter l'humidité et pour maintenir un niveau approprié d'humidité en relation avec ladite au moins une fibre (438), pour refroidir de ce fait les collecteurs solaires photovoltaïques associés à celle-ci.

10. Système de collecte d'énergie solaire selon l'une quelconque des revendications précédentes, **caractérisé en ce qu'**il comprend en outre :
- un système de tuyaux comprenant des tuyaux pour fournir de l'eau de mer profonde aux dispositifs de refroidissement.

11. Système de collecte d'énergie solaire selon l'une quelconque des revendications précédentes, et **caractérisé en ce qu'**il comprend en outre :
- un capot pour protéger les collecteurs solaires photovoltaïques et/ou les dispositifs de refroidissement d'un rayonnement solaire direct, pour améliorer de ce fait l'effet de refroidissement.

12. Système de collecte d'énergie solaire selon l'une quelconque des revendications précédentes, et **caractérisé en ce qu'**il comprend en outre :
- un nombre approprié de supports pivotants associés aux collecteurs solaires photovoltaïques (421), pour permettre de ce fait un ajustement contrôlable des collecteurs solaires photovoltaïques de manière à maintenir un angle optimal par rapport aux lentilles de Fresnel correspondantes.

13. Système de collecte d'énergie solaire selon la revendication 1, **caractérisé en ce qu'**il comprend :
- une pluralité de rangées de supports (431) supportés au-dessus du capot, et **en ce que** lesdits collecteurs solaires photovoltaïques (421) sont maintenus par les supports de manière à être orientés vers les lentilles de Fresnel (422).

14. Système de collecte d'énergie solaire selon la revendication 13, **caractérisé en ce qu'**au moins certains des supports définissent une forme en V qui maintient une paire de rangées de collecteurs solaires photovoltaïques, et comprenant en outre :
- un dispositif de refroidissement résidant dans la forme en V.

15. Système de collecte d'énergie solaire selon la revendication 13 ou 14, et **caractérisé en ce qu'**il comprend en outre :
- au moins une fibre humidifiable (438) située adjacente à l'un des supports, la fibre étant appropriée pour être imbibée de manière à refroidir par évaporation un collecteur solaire photovoltaïque correspondant monté sur la surface inférieure du support respectif ; et
- un système de régulation d'humidité relié de manière opérationnelle à ladite au moins une fibre humidifiable, le système de régulation d'humidité étant conçu pour détecter l'humidité et pour maintenir un niveau approprié d'humidité en ce qui concerne ladite au moins une fibre humidifiable (438), pour refroidir de ce fait le collecteur solaire photovoltaïque associé à celle-ci.
